# EUROPEAN PATENT APPLICATION

(11) **EP 2 827 046 A1**
(43) Date of publication of application: **21.01.2015**
(21) Application number: 13760650.5
(22) Date of filing: 11.03.2013
(51) Int. Cl.: F21S 4/00, F21V 19/00, F21V 23/00, F21V 29/00, F21V 9/00, F21V 7/22, F21Y 101/02

(54) **LED LIGHTING COLUMN AND LED LAMP USING SAME**

(30) Priority: 12.03.2012 CN 201210063705; 26.04.2012 CN 201220184752 U; 21.06.2012 CN 201210211538; 05.11.2012 CN 201220578926 U; 06.12.2012 CN 201220678171 U; 28.12.2012 CN 201210591074; 11.01.2013 CN 201320016905 U; 27.02.2013 CN 201320089879 U
(71) Applicant: Zhejiang Ledison Optoelectronics Co., Ltd., Hangzhou, Zhejiang 310012 (CN)
(72) Inventor: GE, Shichao, Hangzhou Zhejiang 310012 (CN); GE, Xiaoqin, Hangzhou Zhejiang 310012 (CN); LIU, Huabin, Hangzhou Zhejiang 310012 (CN)
(74) Representative: Witte, Weller & Partner Patentanwälte mbB
(86) International application number: PCT/CN2013/072411
(87) International publication number: WO 2013/135153

(57) **Abstract**

The present invention discloses a LED light-emitting column (1) and a LED light using the same. The LED light-emitting column (1) comprises a high thermal conductivity tube (10) and at least one series of LED chips (11) disposed on an outer surface of the high thermal conductivity tube (10). The LED light comprises a light-transmitting bulb shell (3) vacuum-sealed and filled with a heat dissipation and protection gas, a LED driver (4) and an electrical connector (6). The LED light-emitting column (1) is fixed within the bulb shell (3). Electrical lead (13) of the LED light-emitting column (3) is connected with an outer power supply through the driver (4) and the electrical connector (6). The LED light is a single bulb shell light, a multi-tube light or a U-type light.

## Description

### CROSS-REFERENCE TO RELATED APPLICATION

This application claims the benefit of Chinese Patent Applications No. 201210063705.9 filed on March 12, 2012 and titled as "LED Light Bulb"; No.201220184752.4 filed on April 26, 2012 and titled as "LED Light Bulb Capable of Emitting 4π Light"; No. 201210211538.8 filed on June 21, 2012 and titled as "LED Illumination Lamp Bulb with High Luminous Flux"; No. 201220578926.5 filed on November 5, 2012 and titled as "Ceramic-Tube LED Light"; No.201220678171.6 filed on December 6, 2012 and titled as "High Efficient LED Reflection Light with LED Chip Emitting 4π Light"; No.201210591074.8 filed on December 28, 2012 and titled as "LED Energy-Saving Light with U-type Light Tube"; No.201320016905.9 filed on January 11, 2013 and titled as "LED Light Bulb Capable of Emitting Lights in All Directions"; and No. 201320089879.2 filed on February 27, 2013 and titled as "LED Illumination Lamp Capable of Emitting Lights in All Directions" in the State Intellectual Property Office of China, the disclosures of which are incorporated herein by reference.

### Field of Invention

The present invention relates to a field of LED light, more particularly, to a LED light having a LED light-emitting column as a light source, which can be used for illumination in place of an incandescent lamp and a compact fluorescent light (CFL).

### Background of Invention

In the prior art, a method of manufacturing a LED light (bulb), which can directly take the place of an incandescent lamp or a compact fluorescent light, comprises the steps of: firstly, one or more power type LED(s) is (are) mounted on a metal printed circuit board (MPCB) or a ceramic printed circuit board; then, the assembly is mounted on a metal or ceramic heat sink or can transfer heat to the heat sink through a heat pipe; a light-transmitting bulb shell is provided in front of the LED(s), and the heat sink is provided therein with a LED driver which is connected with an electrical connector. In this way, the LED light is manufactured. The details of the manufacturing method are disclosed, for example, in the Chinese Patent Applications Nos. 201010148141.X, 201110242939.5, 201210262510.7 and 201220259885.3 and in the US Patents Nos. 7303932, 8138512, 8167468, 8297797 and so on.

At present, the luminous efficiency and service life of such type of LED lights are equal to or larger than those of compact fluorescent lights. Furthermore, such type of LED lights do not contain harmful mercury and may be used for general illumination in place of most of incandescent lamps and compact fluorescent lights.

Such type of LED lights, however, needs a bulky metal heat sink. The greater the power of the light is, the larger the size of the heat sink is or the heavier the heat sink is. In addition, such type of LED lights also has the following disadvantages. The luminous efficiency of such type of LED lights is lower. The LED light having a warm color temperature and a CRI (color rendering index) of about 83 has a luminous efficiency of 50-80 Im/W, which is similar to the compact fluorescent lights. Moreover, such type of LED lights has a higher cost that is three to six times higher than that of the compact fluorescent light with the same luminous flux as that of the LED light. Therefore, the LED light is not widely used at present.

Further, a power type LED packaging technique in the prior art may be used to mount a plurality of LED chips on metal and ceramic printed circuit boards. The packaging technique is a COB (Chip On Board) technique, the details of which are disclosed, for example, in the Chinese Patent Applications Nos. 200910036911.9 and 02248875.8 and the US Patents Nos. 8022626 and 8283868. Although high-power LEDs packaged by means of such type of packaging technique have been mass-produced as LED elements, and the LED elements additionally provided with appropriate heat sinks have been used for illumination, such as street lamps, they still need bulky metal heat sinks.

Further, as described in the Patents EP2292970 and US2011050073, LED filaments provided on flexible PCB(s) may be disposed within bending light tubes (e.g., serpentuators) to produce a LED light having a similar shape to that of the compact fluorescent light. For example, the Chinese Patent Applications Nos. 200920247122.5 and 201110326614.5 have disclosed a U-shaped light tube in which a PCB mounted with LEDs is provided. Since LED elements are mounted on the flexible PCB or heat is dissipated by means of a shell of a driver, such LED light has a limited heat dissipation capacity and cannot be produced as an illumination lamp having a high luminous flux.

As described in the Chinese Patent Application No. 201110032325.6, a LED light cup is disclosed. LED chips are mounted on transparent ceramics which is connected with a heat conduction pipe. The heat conduction pipe is connected with a heat sink provided outside of the light cup and dissipates heat. The inside of the light cup is evacuated or is filled with inert gas. In such a structure that a LED chip is connected with a heat pipe and the heat pipe is connected with the outer heat sink via a vacuum bulb shell, the heat pipe must be vacuum-sealed with the glass bulb shell. However, this cannot be easily realized in terms of process.

In order to overcome the above-mentioned drawbacks, the inventors of the present application have invented a LED light which emits light in all directions and does not need a metal heat sink, comprising LED light-emitting filaments which have LED chips emitting a 4π light and a vacuum sealed bulb shell which is vacuum-sealed and is filled with a gas having a low coefficient of viscosity and a high coefficient of thermal conductivity, for example, with reference to the Chinese Patent Application Nos. 201010278760.0 and 201010610092.7. The luminous efficiency of the whole light is up to 180 Im/W. The CRI is up to 97. No metal heat sink is needed. The weight of the light is very light and is close to that of the incandescent lamp. With such configuration, the LED light having a luminous efficiency of 100-180 Im and capable of directly taking the place of the incandescent lamp and the compact fluorescent light can be produced.

However, the LED chips of such LED light having LED light-emitting filaments are wrapped by both a layer of silicone and a layer of luminescent powder having a thermal conductivity of only 0.3W/m • K, and thus it is difficult to dissipate heat of the chips. At present, it is difficult to produce a high luminous-flux light having an output luminous flux greater than 800 Im.

Therefore, it is necessary to provide a LED light capable of outputting a higher luminous flux, without needing a heat sink, and a relevant LED luminous source.

### Summary of Invention

An object of the present invention is intended to solve or alleviate at least one aspect of the above problems and defects existing in the prior art.

The present invention proposes a LED light with an output luminous flux up to 800-5000lm or more, which is capable of directly taking the place of an incandescent lamp and a compact fluorescent light having a larger power and is used for illumination.

According to one aspect of the present invention, there is provided a LED light-emitting column used as a light source in a LED light having the above-mentioned high luminous flux. The LED light-emitting column comprises a high thermal conductivity tube; at least one series of LED chips emitting lights with the same or different colors or at least one LED light-emitting filaments mounted with at least one series of LED chips emitting lights with the same or different colors, being disposed on an outer surface of the high thermal conductivity tube, wherein the at least one series of LED chips or the at least one light-emitting filaments being connected in series or in series-parallel; and electrical leads for the at least series of LED chips or at least one LED light-emitting filaments, the electrical leads being configured to be connected to a driving power supply of the LED light, and the LED light-emitting column being lightened when the power supply is switched on.

The high thermal conductivity tube is made of transparent ceramics, ALN ceramics, glass, metal or plastics, and the high thermal conductivity tube has a circular cylindrical shape, a polyhedral shape, a circular cone shape, a polyhedral cone shape or other shapes.

The outer surface of the high thermal conductivity tube comprises at least one planar portion configured for fixing the LED chips or the LED light-emitting filaments.

The high thermal conductivity tube made of metal is, for example, in a circular cylindrical tube, a polyhedral shape tube, a circular cone-shaped tube or a polyhedral cone-shaped tube which has a high light reflectivity layer, or is a polyhedral tube or a polyhedral cone-shaped tube composed of a plurality of high thermal conductivity plates, and the metal is, for example, aluminum, copper, silver or other high thermal conductivity metals.

The LED chips are blue-light chips, ultra-violet LED chips, red-light chips or combination thereof. A first luminescent powder layer is provided on the LED chips, and the first luminescent powder layer is a light luminescent powder glue, a luminescent powder tube or a semi-column luminescent powder tube produced by mixing a transparent glue and luminescent powders.

The LED chips may also be RGB three primary color chips or multi-primary color chips.

The LED chips are chips each having one or more PN junctions.

The LED chips are chips, substrates of which are transparent, have reflection films or are opaque;

According to another aspect of the present invention, the LED light-emitting column is at least one LED light-emitting filaments mounted onto a high thermal conductivity tube, the LED light-emitting filaments each comprises a high thermal conductivity substrate and at least one series of LED chips emitting lights with the same or different colors provided on a first surface of the high thermal conductivity substrate, and a first luminescent powder layer is provided on the LED chips. The high thermal conductivity substrate of the LED light-emitting filament is made of sapphire, AIN ceramics, transparent ceramics, glass, metal or plastics. Another second surface of the high thermal conductivity substrate of the LED light-emitting filaments ( a second surface which is opposite to the first surface) is fixed on the high thermal conductivity tube by a transparent glue, a heat conduction glue or a silver slurry.

Outer surfaces of the LED light-emitting filaments and the high thermal conductivity tube are further coated with a second luminescent powder layer.

The high thermal conductivity tube of the LED light-emitting column has a larger surface area than that of the LED chips. Since the LED chips are directly mounted on the high thermal conductivity tube or are mounted on the high thermal conductivity tube through the high thermal conductivity substrate, heat resistance between the PN junctions of the LED chips and the high thermal conductivity tube is very low. Thus, the heat generated during the operation of the LED chips can be easily dissipated through the high thermal conductivity tube, and more LED chips or LED chips having a larger power can be used to produce a LED light-emitting device having a higher output luminous flux and a higher luminous efficiency.

The high thermal conductivity substrate and tube can be made of the materials having a high thermal conductivity, and thus having a very high thermal conductivity, for example, the sapphire having a thermal conductivity of 46W/m•K, the AIN ceramics having a thermal conductivity of 170 W/m•K, the copper or aluminum having a thermal conductivity of 200-400 W/m•K.

The high thermal conductivity tube is made of metal, for example an aluminum having a high light reflectivity layer, or other high thermal conductivity metals.

In accordance with another aspect of the present invention, it provides a method of manufacturing the LED light using the LED light-emitting column as described above. A light-transmitting bulb shell of the LED light is formed by sealing a bulb shell body and its core column by means of fusing at high temperature, wherein the core column is provided with an exhaust tube, a trumpet-shaped tube, an electrical lead and a bracket. The light-transmitting bulb shell is provided therein with a heat conduction and protection gas having a low coefficient of viscosity and a high coefficient of thermal conductivity. The light-transmitting bulb shell is evacuated by the exhaust tube and then is filled with a heat dissipation and protection gas, and then the exhaust tube is sealed by fusing to seal the heat dissipation and protection gas into the light-transmitting bulb shell.

The LED light-emitting column is provided and fixed onto the electrical leads and the bracket of the core column of the bulb shell.

The LED light-emitting column is fixed on the core column, for example, electrical leads provided at two ends of the LED chip, which is provided at an end of the LED light-emitting column adjacent to the core column, and the electrical lead of the core column are fixed to each other by soldering, and the other end of the LED light-emitting column facing away from the core column is fixed by a spring on the bracket of the core column. The bracket of the core column is a glass tube, a glass column, or a metal filament having a certain thickness.

In the LED light, the LED light emitting column is made of materials having a high thermal conductivity. Heat resistance between the PN junctions of the LED chips and the high thermal conductivity tube is very low, and the high thermal conductivity tube has a larger surface area (the inner and outer surface both dissipate heat), thus, the heat generated during the operation of the LED chips can be easily through the high thermal conductivity tube having the lager surface area, transferred to the heat conduction gas within the bulb shell, and dissipated away from the bulb shell through the convection and conduction of the heat conduction gas. Therefore, it is possible to manufacture a LED light having a higher output luminous flux and a higher luminous efficiency.

The shape of the light-transmitting bulb shell may be selected from those of bulb shells of the existing general incandescent lamps and compact fluorescent lights, such as A-type, BR-type, C-type, G-type, S-type, T-type, R-type, PAR-type, mushroom-type or pear-type.

The shape of the electrical connector may be selected from those used in the existing general incandescent lamps and compact fluorescent lights, such as E-type, GU-type, GX-type, GZ-type or B-type.

In accordance with another aspect of the present invention, it provides a LED light having a plurality of LED light tubes manufactured by the LED light-emitting column as described above, comprising:
at least two LED light tubes in T shape, wherein each LED light tube comprises a LED light-emitting column and is vacuum-sealed, and each LED light tube has an electrical lead for the LED light-emitting column;
a LED driver and its shell, the LED light tube being mounted and fixed to a top of the shell of the LED driver, and wherein an output terminal of the LED driver is electrically connected with the electrical lead of the at least two LED light tubes, and an input terminal of the LED driver is electrically connected with an electrical connector configured to connect with an outer power supply, such that the respective LED light tube can be lightened when the outer power supply is switched on.

The at least two LED light tubes are separated from each other and thus the air flowing freely around each LED light tube can effectively dissipate away the heat generated during the operation of the LED light tube.

The LED driver is a constant current power supply configured to supply a constant-current driving voltage to each LED light tube.

In accordance with a further aspect of the present invention, it provides a LED light having a U-type or H-type light tube manufactured by the LED light-emitting column, comprising:
at least one U-type or H-type light tubes, two opening ends of the U-type or H-type light tube and the core columns are sealed by fusing at a high temperature, respectively, so as to constitute the vacuum-sealed U-type or H-type light tube;
at least one core column provided at the two ends of the U-type or H-type light tube is provided with an exhaust tube configured for evacuation and filled with a heat dissipation and protection gas;
the U-type or H-type light tube is provided at two ends thereof with the LED light-emitting columns and their corresponding electrical leads, respectively;
electrical connector configured to be connected with an outer power supply;
a LED driver and its shell, the shell of the LED driver connecting the U-type or H-type light tube and the electrical connector with one another to form a whole light, and wherein electrical leads of the U-type or H-type light tube are connected with an output terminal of the LED driver via electrical leads of the core column, and an input terminal of the LED driver is electrically connected with the electrical connector, such that the LED light can be lightened when the outer power supply is switched on;

The LED driver is a constant current power supply configured to supply a constant-current driving voltage to the each LED light-emitting column of the U-type or H-type light tube.

In accordance with another yet aspect of the present invention, it provides a LED plane light constituted of a plurality of U shaped light tubes manufactured by the LED light-emitting column.

The LED light-emitting column and the LED light manufactured by it provide the following advantages: good characteristic of dissipating heat, high output luminous flux, high efficiency, simple manufacturing process, and low cost. They can directly replace the incandescent lamp and the compact fluorescent light, for illumination.

### Brief Description of the Drawing

Those and/or other aspects and advantages of the present invention can be apparent and readily understood from the following description of the preferred embodiment, in combination with the accompanying drawings, wherein:
Fig.1 is a schematic structure view of a LED light provided with a LED light-emitting column in accordance with an embodiment of the present invention;
Fig.2 is a schematic structure view, in cross-section, of the LED light-emitting column taken along an A-A line in Fig. 1 in accordance with an embodiment of the present invention;
Fig.3 is a schematic structure view, in cross-section, of the LED light-emitting column taken along the A-A line in Fig. 1 in accordance with another embodiment of the present invention;
Fig.4 is a schematic structure view, in cross-section, of LED light-emitting filaments of the LED light-emitting column in accordance with an embodiment of the present invention;
Fig. 5 is a schematic structure view, in cross-section, of LED light-emitting filaments of the LED light-emitting column in accordance with another embodiment of the present invention;
Fig. 6 is a schematic structure view of the LED light having a plurality of light tubes in accordance with another embodiment of the present invention;
Fig. 7 is a schematic structure view of the LED light in accordance with another embodiment of the present invention;
Fig. 8 is a schematic structure view of the LED light in accordance with another embodiment of the present invention;
Fig. 9 is a schematic structure view of the LED light having a H-type light tube in accordance with another embodiment of the present invention;
Fig. 10 is a schematic structure view of the LED light having a U-type light tube in accordance with another embodiment of the present invention; and
Fig. 11 is a schematic structure view of a LED plane light having a plurality of light tubes in accordance with another embodiment of the present invention.

### Detailed Description of the Embodiments of the Invention

The technical solution of the present invention will be further explained in detail, by the following embodiments, with reference to the accompanying drawing. Throughout the specification, the same or similar reference numerals will indicate the same or similar components. The explanation to the implementing of the present invention with reference to the accompanying drawing is intended to interpret the general inventive concept of the present invention, instead of limiting the present invention.

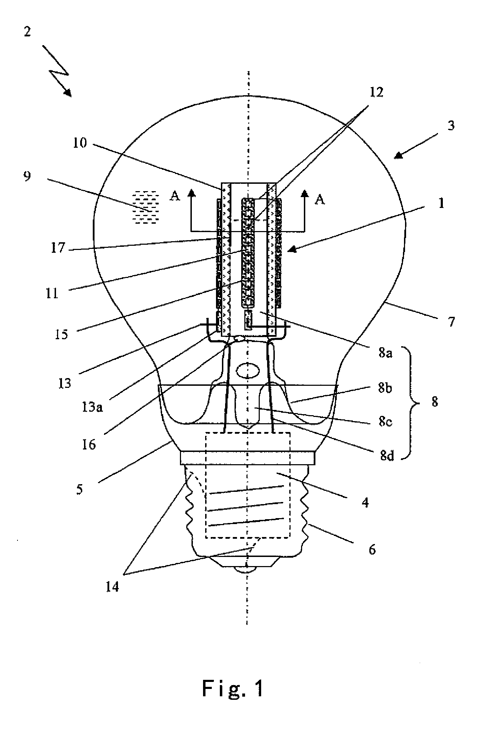

Fig. 1 is a schematic structure view of a LED light 2 provided with a LED light-emitting column 1 in accordance with an embodiment of the present invention. The LED light 2 comprises at least one LED light-emitting column 1, a light-transmitting or transparent bulb shell 3, a LED driver 4 and its shell 5, and an electrical connector 6. The shell 5 of the LED driver 4 connects the light-transmitting bulb shell 3 in which the LED light-emitting column 1 is sealed, the LED driver 4 and the electrical connector 6 into a whole light. Specifically, an electrical lead 13 of the LED light-emitting column 1 is connected with an output terminal of the LED driver 4 via an electrical lead 8d of a core column 8, and an input terminal of the LED driver 4 is electrically connected with the electrical connector 6. Thus, when an outer power supply (not indicated) is turned on or an operating voltage is inputted, the LED light-emitting column 1 can be lightened.

The light-transmitting bulb shell 3 is formed by sealing a bulb shell body 7 and the core column 8 provided with a bracket 8a, a trumpet-shaped tube 8b, an exhaust tube 8c and the electrical lead 8d by means of fusing at a high temperature. Thus, the light-emitting bulb shell 3 is vacuum-sealed. The bulb shell 3 is filled with a heat conduction and protection gas 9 having a low coefficient of viscosity and a high coefficient of thermal conductivity after being evacuated via the exhaust tube 8c. Then the exhaust tube 8c is fused to seal the filled gas within the bulb shell 3.

In the present embodiment, the LED light-emitting column 1 is mounted and fixed on the electrical lead 8d and the bracket 8a of the core column 8. The LED light-emitting column 1 comprises a tube 10 having a high thermal conductivity. The outer surface of the tube 10 is provided with at least one series of LED chips 11 emitting lights with the same or different colors. The LED chips 11 are connected with one another in series or in series-parallel by electric connection wires 12. The total driving voltage of the LED chips 11 is equal to or adjacent to the output voltage of the driver 4. An electric connection between the LED chips 11 is realized onto the high thermal conductivity tube 10. Only connection between electrical leads 13 and the electrical lead 8d of the core column 8 is needed to be realized by welding. Therefore, the LED light 2 of the present invention has the following advantages:
◆the processes for manufacturing the LED light 2 are simple;
◆the LED light 2 is suitable for mass production;
◆the LED light 2 has a high reliability and a low cost.

As shown in Fig. 1, the two ends of the LED light-emitting column 1 are provided with the electrical leads 13. Each electrical lead 13 is connected with the electrical lead 8d of the core column 8. The electrical leads 13 are fixed on the high thermal conductivity tube 10 by a fastening device 13a for the electrical leads 13 (in the present embodiment, the fastening device 13a is fixed at the lower end of the high thermal conductivity tube 10).

The electrical lead 8d of the core column 8 is connected with the output terminal of the LED driver 4. The input terminal of the LED driver 4 is connected with the electrical connector 6 via electric connection wires 14. The electrical connector 6 is used for connection with an outer AC or DC power supply. When the outer power supply is turned on, the LED light-emitting column 1 can be lightened.

The transparent bulb shell 3 of the present invention is formed by vacuum-sealing the bulb shell body 7 and the core column 8, both of which are made of the same glass material. As described above, the core column 8 is composed of the bracket 8a, the trumpet-shaped tube 8b, the exhaust tube 8c and the electrical leads 8d. The trumpet-shaped tube 8b and the bulb shell body 7 are sealed by fusing at a high temperature. After sealing by fusing, the transparent bulb shell 3 is evacuated via the exhaust tube 8c and is filled with the gas 9 having a low coefficient of viscosity and a high coefficient of thermal conductivity through the exhaust tube 8c. Then, the exhaust tube 8c is sealed by fusing, and the filled gas 9 having a high coefficient of thermal conductivity is sealed within the transparent bulb shell 3. The gas 9 having a low coefficient of viscosity and a high coefficient of thermal conductivity may be helium, hydrogen, mixture of helium and hydrogen, nitrogen or other gases.

The LED chips 11 are blue-light, red-light or ultraviolet-light chips. Around the LED chips 11, a first luminescent powder layer 15 is provided to convert the light emitted by the LED chips 11 into a desired white light or a desired light having other colors. In order to obtain a desired color temperature and a desired color rendering index, LED chips emitting lights having other colors may be additionally provided. The LED chips 11 may be chips emitting lights having three primary colors R, G, B or plural primary colors. With respective chips emitting lights having different colors, output light having different colors can be obtained. The LED chips 11 are chips, chip substrates of which are transparent, have reflection films or are opaque. Each of the LED chips 11 is a chip having one or more PN junctions.

The high thermal conductivity tube 10 of the LED light-emitting column 1 is made of a material having a high thermal conductivity, such as transparent ceramics, AIN ceramics, glass, metal or plastics. The metal may be, for example, aluminum or copper having a high light reflectivity, or other metals having a high thermal conductivity. In this way, a larger contact area with the gas having a low coefficient of viscosity and a high coefficient of thermal conductivity can be obtained, that is, thermal resistance between the LED chips 11 and the heat dissipation gas 9 is reduced, thereby improving heat dissipation effect of the LED. The high thermal conductivity tube 10 may be in a cylindrical shape, a polyhedral shape, a circular cone shape, a polyhedral cone shape or other shapes. Fig. 1 shows an example of the high thermal conductivity tube 10 in a cylindrical shape.

As shown in Fig. 1, the high thermal conductivity tube 10 is mounted on the bracket 8a of the core column 8. The bracket 8a is a glass tube on the core column 8. The high thermal conductivity tube 10 in the cylindrical shape as shown in Fig. 1 may have an inner diameter matching an outer diameter (for example, 4-40mm) of the bracket 8a on the core column 8, so that the high thermal conductivity tube 10 may be fitted over the bracket 8a. Between the high thermal conductivity tube 10 and the bracket 8a, a fixing glue 17 is provided to fix the tube 10 and the bracket 8a to each other. The bracket 8a is provided, at an end thereof adjacent to the exhaust tube 8c, with at least one through holes 16 for gas circulation and heat dissipation in the high thermal conductivity tube 10, so that the LED light 2 having a larger power and a higher luminous flux can be produced.

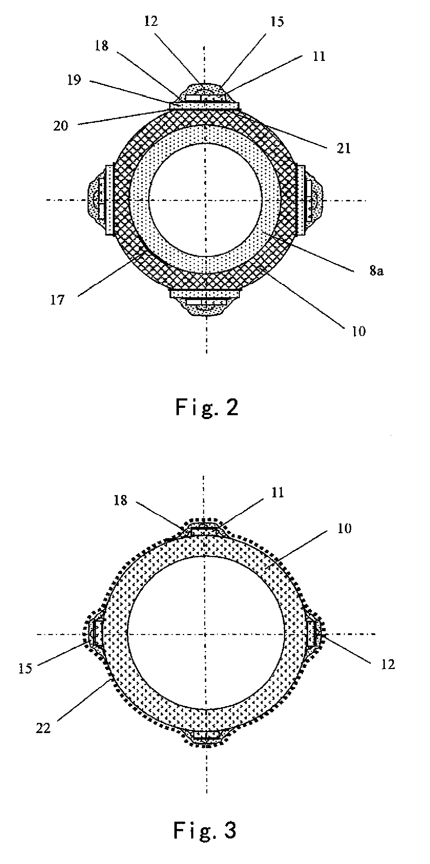

It can be appreciated that the LED chips 11 are directly mounted on the high thermal conductivity tube 10 or are mounted on the high thermal conductivity tube 10 through a high thermal conductivity substrate 19, as described hereinafter with reference to Figs. 2 and 3. The high thermal conductivity tube 10 has a high thermal conductivity and a larger surface area, and the heat generated during the operation of the LED chips 11 is likely to be transferred to the high thermal conductivity tube 10, and then to the heat conduction gas 9 in the bulb shell 3 through the larger heat dissipation surface of the high thermal conductivity tube 10, and then to the bulb shell 3 through convection and heat conduction of the heat conduction gas 9, and finally is dissipated through an air around the bulb shell 3.

Since the LED chips 11 are directly mounted on the high thermal conductivity tube 10 or are mounted on the high thermal conductivity tube 10 through the high thermal conductivity substrate 19, heat resistance between the LED chips 11 and the high thermal conductivity tube 10 is low. Furthermore, since the high thermal conductivity tube 10 has a large surface area(including the inner and outer surfaces theereof), the contact area of the tube 10 with the heat conduction gas 9 is large. Thus, the heat generated during the operation of the LED chips 11 can be easily dissipated, and more LED chips 11 or LED chips 11 having a larger power can be used to produce a LED light having a higher output luminous flux and a higher luminous efficiency.

The shape of the light-transmitting bulb shell 3 may be selected from those of bulb shells of the existing general incandescent lamps and compact fluorescent lights, such as A-type, BR-type, C-type, G-type, S-type, T-type, R-type, PAR-type, mushroom-type or pear-type. The shape of the light-transmitting bulb shell 3 is not limited to that shown in Fig. 1.

The shape of the electrical connector 6 may be selected from those used in the existing general incandescent lamps and compact fluorescent lights, such as E-type, GU-type, GX-type, GZ-type or B-type. The shape of the electrical connector 6 is not limited to that shown in Fig. 1.

Fig. 2 is a schematic structure view, in cross-section, of the LED light-emitting column taken along an A-A line in Fig. 1 in accordance with an embodiment of the present invention. As shown in Fig. 2, the LED light-emitting column 1 according to the present invention comprises the high thermal conductivity tube 10 and the at least one series of LED chips 11 emitting lights with the same or different colors. The LED chips 11 are fixed on a first surface of the high thermal conductivity substrate 19, for example, by a bonding glue 18. The first luminous power layer 15 is provided on the LED chips 11. A second surface of the high thermal conductivity substrate 19 (opposite to the first surface) is fixed on the high thermal conductivity tube 10 by a boding glue 20. In the present embodiment, the high thermal conductivity tube 10 is fitted over the bracket 8a.

The high thermal conductivity substrate 19 is made of sapphire, AIN ceramics, transparent ceramics, glass, metal or plastics. The bonding glue 18 and 20 may be a thin layer of silica gel, silver slurry, a heat conduction glue, soldering tin and the like.

The high thermal conductivity tube 10 is in a cylindrical shape. The high thermal conductivity tube 10 is provided on the surface thereof with at least one plane portions 21 configured for installation of the LED chips 11 or the high thermal conductivity substrate 19 having the LED chips 11. Fig. 2 shows an example in which the high thermal conductivity substrate 19 having the LED chips 11 is mounted on the plane portion 21.

It can be appreciated that in the following description, in combination with Fig. 2 and the respective figures, the same or similar reference numerals indicate the same component or the identical structure, unless otherwise stated explicitly.

Fig. 3 is a schematic structure view, in cross-section, of the LED light-emitting column 1 taken along the A-A line in Fig. 1 in accordance with another embodiment of the present invention. The LED light-emitting column 1 according to the present embodiment, the LED chips 11 are directly bonded and fixed on the high thermal conductivity tube 10 by the bonding glue 18. The LED chips are provided with the first luminous power layers 15 thereon. A second luminous power layer 22 is provided on the outer surfaces of the first luminous power layers 15 and of the high thermal conductivity tube 10.

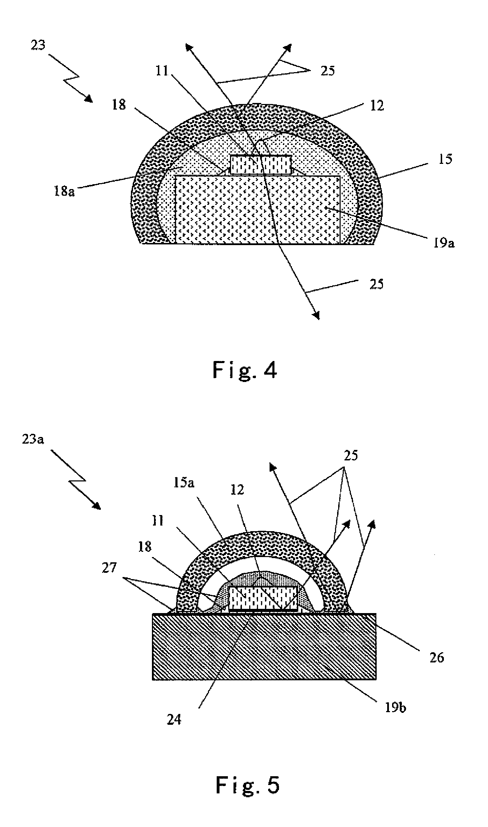

Fig. 4 is a schematic structure view, in cross-section, of LED light-emitting filaments 23 of the LED light-emitting column 1, of the LED light 2 in accordance with an embodiment of the present invention.

As shown in Fig. 4, the LED light-emitting filaments 23 of the LED light for illumination and emitting lights in all directions comprise a substrate 19a made of a sapphire, AIN ceramics or transparent ceramics, and the at least one series of LED chips 11 emitting lights with the same or different colors and fixed on the substrate 19a by the bonding glue or transparent glue 18. The periphery of the at least one series of LED chips 11 emitting lights with the same or different colors is provided with the first luminescent powder layer 15. The first luminescent powder layer 15 is formed by mixing a transparent glue and luminescent powders. Each of the at least one series of LED chips 11 emitting light with the same or different colors is a chip having a transparent substrate or a substrate with a reflection layer. Fig. 1 shows an example of a transparent substrate chip(i.e., a chip having a transparent substrate). The light emitted by the LED chips 11 exits from front faces of the chips 11 through the first luminescent powder layer 15 or through the substrate 19a of the light-emitting filaments 23, as shown by the reference numeral 25 in Fig. 4. Since the substrate 19a is a transparent substrate, the light may be transmitted along all directions around the light-emitting filaments 23, i.e., emitting a 4π light. The at least one series of LED chips 11 are connected with one another in series or in series-parallel. The reference numeral 12 in Fig. 4 indicates electrical connection wires between the LED chips. Further, a transparent glue 18a may be provided between the luminescent powder layer 15 and the LED chips 11.

Fig. 5 is a schematic structure view, in cross-section, of LED light-emitting filaments 23a of the LED light-emitting column 1, of the LED light 2in accordance with another embodiment of the present invention. As shown in Fig. 5, a high thermal conductivity substrate 19b is made of high thermal conductivity metal. The surface of the substrate 19b, on which the LED chips 11 are mounted, is provided with a high light reflectivity layer 26. The LED chips 11 are transparent chips or chips having a light reflection layer 24. Fig. 5 shows an example of a chip having the light reflection layer 24. The LED chips 11 are covered with a transparent glue layer 27. The luminescent powder layer on the LED chips 11 is a luminescent powder tube 15a, in a semi-column shape, formed by mixing a transparent glue and luminescent powders. The luminescent powder tube 15a is fixed on the high light reflectivity layer 26 of the high thermal conductivity substrate 19b by the transparent glue 27. The transparent glue 27 may be filled between the LED chips 11 and the luminescent powder tube 15a. Alternatively, the transparent glue may cover the LED chips 11 only and fix the luminescent powder tube 15a. Fig. 5 shows an example in which the transparent glue only covers the LED chips 11 and fixes the luminescent powder tube 15a. The light emitted by the LED chips 11 may directly exit through the luminescent powder layer 15a, or may exit after being reflected by the high light reflectivity layer 24 or 26, as shown by the light ray 25 in Fig. 5.

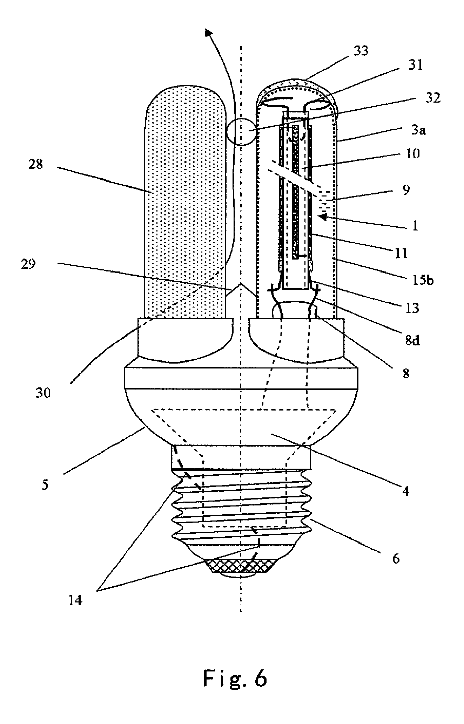

Fig. 6 is a schematic structure view of the LED light having a plurality of light tubes in accordance with an embodiment of the present invention. As shown in Fig. 6, the LED light includes at least two LED light tubes 28 which are vacuum-sealed respectively. The LED light tubes 28 are T-type light tubes. Each LED light tube 28 is mounted with one LED light-emitting column 1 according to the present invention as described above. The at least two light tubes 28 are mounted on a top of a shell 5 of the LED driver 4. A space between respective LED light tubes 28 is filled with an air which is able to freely flow, so that the heat generated during the operation of the respective LED light tubes 28 can be easily carried off and dissipated. The top of the shell 5 of the LED driver, on which the LED light tubes 28 are mounted, is in a projecting taper 29. Specifically, a full taper angle of a top of the taper 29 is, for example, less than 120° to facilitate rapidly flowing of an air flow 30, thereby carrying the heat of the LED light tube 28 off and dissipating the heat away.

The electrical leads 13 of the LED light-emitting column 1 are connected and fixed with the electrical leads 8d of the core column 8. An upper end of the high thermal conductivity tube 10 of the LED light-emitting column 1 is fixed with a bulb shell 3a of the light tube through a spring 31.

The luminescent powder layer 15b of the LED light tube 28 is coated on an inner wall of the LED light tube 28.

In order to enhance a mechanical strength of the LED light, a fixing device 32 may be provided between the respective LED light tubes 28. The tops of the respective light tubes may be provided with layers 33 of transparent soft gel, such as silica gel, for protecting the bulb shell 3a and enhancing a breakage-resistant strength of the light tube 28.

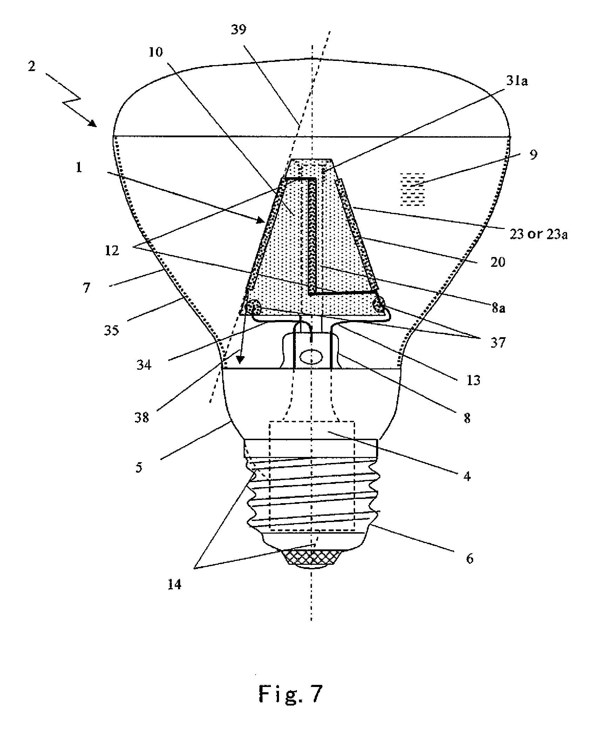

Fig. 7 is a schematic structure view of the LED light in accordance with another embodiment of the present invention.

As shown in Fig. 7, the high thermal conductivity tube 10 of the LED light-emitting column 1 may be a circular cone-shaped or polyhedral cone-shaped tube, such as a tube made of aluminum, copper or other high thermal conductivity metals and an outer surface of which is coated with a high reflectivity layer, or a polyhedral column or a polyhedral cone-shaped column constituted by a plurality of high thermal conductivity plates. The upper end of the high thermal conductivity tube 10 is fixed on the bracket 8a of the core column by a spring 31 a. The bracket 8a is a glass tube or a glass column. A lower end of the bracket 8a is fixed by soldering the electrical lead 13. In order to enhance a fixing strength of the high thermal conductivity tube 10, at least one metal filaments 34 may be additionally provided on the core column 8 and may be connected with the high thermal conductivity tube 10 to fix the high thermal conductivity tube 10. The bulb shell 7 is a R-type bulb shell partly provided with a reflection layer 35. A bevel 39 formed by inclined faces of the cone-shaped high thermal conductivity tube 10 substantially covers the shell 5 of the driver and shields off the light emitted from the LED light-emitting column 1 towards the shell 5 of the driver, as shown at reference numeral 38 in Fig. 5, thereby reducing loss of the light emitted from the LED light-emitting column 1 towards the driver 4 and its shell 5 and improving the luminous efficiency.

The high thermal conductivity tube 10 is mounted with at least one LED light-emitting filaments 23 or 23a as shown in Fig. 4 or Fig. 5. The LED light-emitting filaments 23 or 23a are fixed on the high thermal conductivity tube 10 by the boding glue 20 and are connected in series or in series-parallel. The electrical leads 13 provided at two ends of the respective LED light-emitting filaments are connected with the electrical lead 8d of the core column 8 and are fixed with each other. The reference numeral 37 indicates a fixing and connecting device.

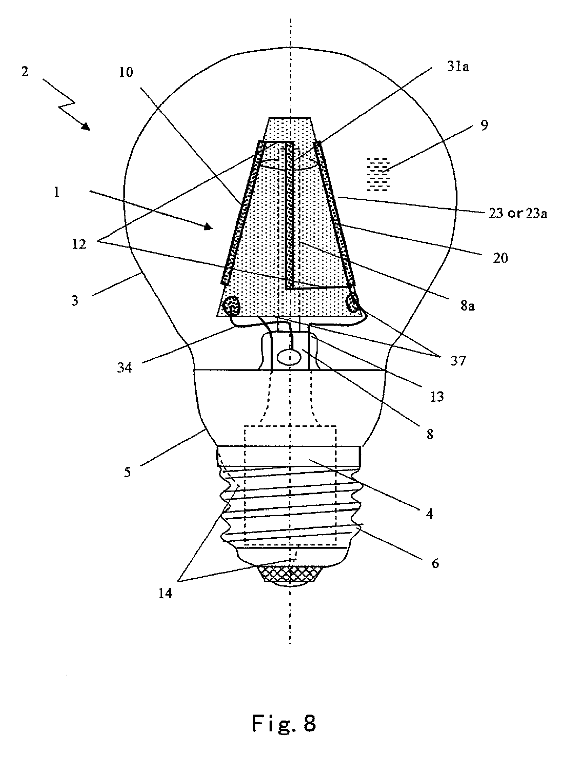

Fig. 8 is a schematic structure view of the LED light in accordance with another embodiment of the present invention.

The main structure of the LED light according to the present embodiment is the same as that of the LED light in Fig. 7. The difference of the present embodiment from the embodiment shown in Fig. 7 is that the vacuum-sealed bulb shell 3 is a A-type bulb shell.

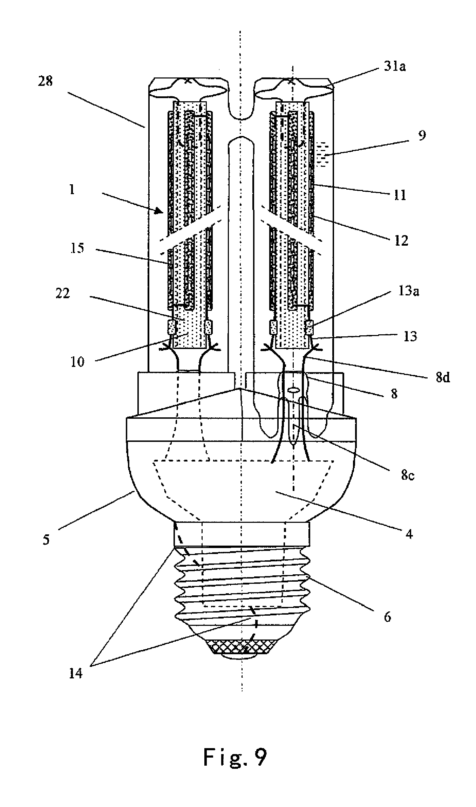

Fig. 9 is a schematic structure view of the U-type LED light having an H-type light tube in accordance with the present invention. As shown in Fig. 9, the light tube 28 is an H-type light tube. The H-type light tube 28 is a U-type light tube, an upper end of which is in an H shape. Each of LED light-emitting columns provided at two ends of the H-type light tube 28 is a LED light-emitting column 1. Each LED light-emitting column 1 comprises a transparent tube 10. The at least one series of LED chips 11 emitting lights with the same or different colors are mounted on an outer surface of the transparent tube 10. Electrodes provided at two ends of the respective LED chips 11 are led out through the electrical leads 13. The electrical leads 13 are fixed on the transparent tube 10 by a fixing device 13a. The transparent tube 10 is a transparent ceramic tube, a glass tube or a plastic tube. Luminescent powder layers 15 and 22 are provided on the chips 11 and the transparent tube 10, respectively. The end of the LED light-emitting column 1 adjacent to the core column 8 is connected and fixed with the electrical lead 8d of the core column 8 through the electrical lead 13. The upper end of the LED light-emitting column 1 is fixed with a tube wall of the light tube 28 by a spring 31 a.

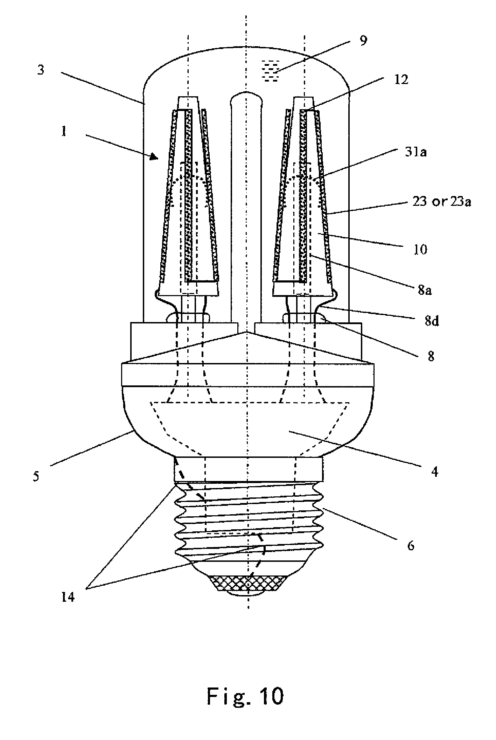

Fig. 10 is a schematic structure view of the LED light having an U-type light tube in accordance with another embodiment of the present invention.

As shown in Fig. 10, the bulb shell 3 of the LED light is at least one U-type light tube. Each of two ends of the U-type light tube is provided with a core column 8, such that the two ends of the U-type light tube is vacuum-sealed. Each of the two ends of the U-type light tube is provided with a LED light-emitting column 1 which is fixed on the electrical lead 8d of the core column 8 and the spring 31 a of the bracket 8a.

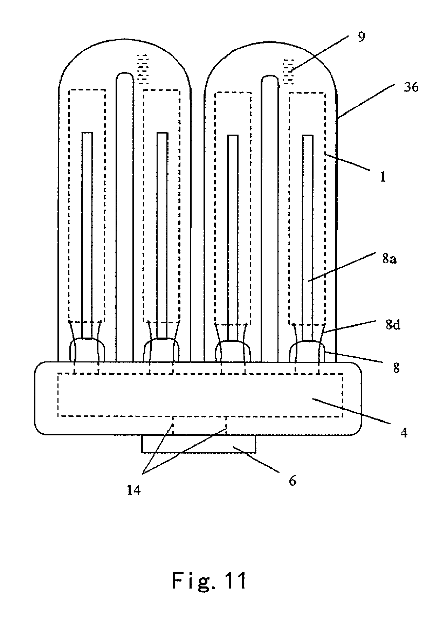

Fig. 11 is a schematic structure view of the LED light in accordance with another embodiment of the present invention. As shown in Fig. 11, the LED light is a LED plane light having a plurality of U-type light tubes 36. The respective U-type light tubes are arranged on the same plane.

Although some embodiments of the general inventive concept are illustrated and explained, it would be appreciated by those skilled in the art that modifications and variations may be made in these embodiments without departing from the principles and spirit of the general inventive concept of the disclosure, the scope of which is defined in the claims and equivalents thereof.

## Claims

1. A LED light-emitting column, comprising:
a high thermal conductivity tube;
at least one series of LED chips emitting lights with the same or different colors or at least one LED light-emitting filaments mounted with at least one series of LED chips emitting lights with the same or different colors, disposed on an outer surface of the high thermal conductivity tube, the at least one series of LED chips or the at least one light-emitting filaments being connected in series or in series-parallel; and
electrical leads for the at least series of LED chips or at least one LED light-emitting filaments, the electrical leads being configured to be connected to a working voltage, and the LED light-emitting column being lightened when the working voltage is introduced.

2. The LED light-emitting column according to claim 1, wherein the high thermal conductivity tube is made of transparent ceramics, ALN ceramics, glass, metal or plastics or is composed of a plurality of high thermal conductivity plates, and the high thermal conductivity tube has a circular cylindrical shape, a polyhedral shape, a circular cone shape or a polyhedral cone shape.

3. The LED light-emitting column according to claim 2, wherein the high thermal conductivity tube made of metal is a circular cylindrical tube, a polyhedral shape tube, a circular cone-shaped tube or a polyhedral cone-shaped tube having a high light reflectivity layer, and the metal is aluminum, copper, silver or a high thermal conductivity alloy.

4. The LED light-emitting column according to claim 1 or 2, wherein the outer surface of the high thermal conductivity tube comprises at least one planar portion configured for fixing the LED chips or the LED light-emitting filaments.

5. The LED light-emitting column according to any one of claims 1-4, wherein:
the LED chips are blue-light chips, ultra-violet LED chips, red-light chips or combination thereof, or are RGB three primary color chips or multi-primary color chips;
the LED chips are chips each having one or more PN junctions;
the LED chips are chips, substrates of which are transparent, have reflection films or are opaque;
a first luminescent powder layer is provided on the LED chips, and the first luminescent powder layer is a light luminescent powder glue, a luminescent powder tube or a semi-column luminescent powder tube produced by mixing a transparent glue and luminescent powder.

6. The LED light-emitting column according to claim 1, wherein the LED light-emitting filament comprises a high thermal conductivity substrate and at least one series of LED chips provided on a first surface of the high thermal conductivity substrate, and a first luminescent powder layer is provided on the LED chips.

7. The LED light-emitting column according to claim 1 or claim 6, wherein at least one series of LED chips are provided on a first surface of a high thermal conductivity substrate of the LED light-emitting filament, and a second surface of the high thermal conductivity substrate opposite to the first surface is fixed on the outer surface of the high thermal conductivity tube by a transparent glue, a heat conduction glue or a silver slurry.

8. The LED light-emitting column according to claim 7, wherein the high thermal conductivity substrate is made of sapphire, AIN ceramics, transparent ceramics, glass, metal or plastics.

9. The LED light-emitting column according to claim 6, wherein outer surfaces of the first luminescent powder layer and the high thermal conductivity tube are coated with a second luminescent powder layer.

10. A LED light, comprising:
a light-transmitting bulb shell formed by vacuum-sealing a light-transmitting bulb shell body and its core column, the light-transmitting bulb shell being provided within a vacuum chamber thereof with a gas having a low coefficient of viscosity and a high coefficient of thermal conductivity;
a LED light-emitting column fixed on the core column;
an electrical connector configured to connect an outer power supply;
a LED driver and its shell, the shell of the LED driver connecting the bulb shell body in which the LED light-emitting column is sealed, the LED driver and the electrical connector with one another to form a whole light, and wherein electrical leads of the LED light-emitting column are connected with an output terminal of the LED driver via electrical leads of the core column, and an input terminal of the LED driver is electrically connected with the electrical connector, such that a LED light-emitting source is lightened when the outer power supply is switched on;
wherein the LED light-emitting column includes at least one LED light-emitting column according to any one of claims 1-9.

11. The LED light according to claim 10, wherein the core column is provided with an exhaust tube, a trumpet-shaped tube, an electrical lead and a bracket, and the LED light-emitting column is fixed on the electrical lead and the bracket of the core column.

12. The LED light according to claim 11, wherein the light-transmitting bulb shell body and the trumpet-shaped tube of the core column are sealed by fusing at a high temperature, and the light-emitting bulb shell is evacuated by the exhaust tube and then is filled with a heat dissipation and protection gas, and then the exhaust tube is sealed by fusing to seal the heat dissipation and protection gas into the light-transmitting bulb shell.

13. The LED light according to any one of claims 10-12, wherein the LED light-emitting column is mounted on the bracket of the core column, and an upper end of the LED light-emitting column is fixed on an inner wall of the bulb shell body by a spring.

14. The LED light according to any one of claims 10-12, wherein the LED light-emitting column is fixed on the bracket of the core column, and electrical leads provided at two ends of the LED chip, which is provided at an end of the LED light-emitting column adjacent to the core column, and the electrical lead of the core column are fixed to each other by soldering, and an end of the LED light-emitting column facing away from the core column is fixed by a spring on the bracket of the core column.

15. The LED light according to any one of claims 10-12, wherein the bracket of the core column is a glass tube or a glass column, and the LED light-emitting column is fitted over and fixed onto the bracket, and wherein an end of the bracket adjacent to the core column is provided with a through hole.

16. The LED light according to any one of claims 10-15, wherein a first and/or second luminescent powder layer on the LED light-emitting column is provided on an inner wall of the light-transmitting bulb shell.

17. The LED light according to any one of claims 10-16, wherein the shape of the light-transmitting bulb shell is one of A type, BR type, C type, G type, S type, T type, R type, PAR type, mushroom type and pear type.

18. The LED light according to any one of claims 10-16, wherein the shape of the electrical connector is one of E type, GU type, GX type, GZ type and B type.

19. A LED light having a plurality of LED light tubes, comprising:
at least two LED light tubes separated from each other and vacuum-sealed respectively, and wherein each LED light tube comprises a light-transmitting bulb shell and the LED light-emitting column according to any one of claims 1-9 which are vacuum-sealed together, and each LED light tube has an electrical lead for a LED light-emitting column;
a LED driver and its shell, the LED light tube being mounted and fixed to a top of the shell of the LED driver, and wherein an output terminal of the LED driver is electrically connected with the electrical lead of the LED light-emitting column, and an input terminal of the LED driver is electrically connected with an electrical connector configured to connect with an outer power supply, such that a LED light-emitting source is lightened when the outer power supply is switched on.

20. The LED light having a plurality of LED light tubes according to claim 19, wherein the light-transmitting bulb shell in each LED light tube is formed by sealing a bulb shell body and a core column provided with an exhaust tube, an electrical lead and a bracket by means of fusing at a temperature, so as to form the vacuum-sealed LED light tube.

21. The LED light having a plurality of LED light tubes according to claim 19, wherein fixing devices are provided between respective LED light tubes, and a top of each light tube is provided with a layer of soft gel.

22. The LED light having a plurality of LED light tubes according to any one of claims 19-21, wherein the LED driver is a constant current power supply configured to supply a constant-current driving voltage to each LED light tube.

23. A LED light having a U-type or H-type light tube, comprising:
at least one U-type or H-type light tubes, two opening ends of the U-type or H-type light tube and two core columns are sealed by means of fusing at a high temperature, respectively, so as to constitute the vacuum-sealed U-type or H-type light tube;
an electrical connector configured to be connected with an outer power supply;
a LED driver and its shell, the shell of the LED driver connecting the U-type or H-type light tube and the electrical connector with one another to form a whole light, and wherein electrical leads of the U-type or H-type light tube are connected with an output terminal of the LED driver via electrical leads of the core column, and an input terminal of the LED driver is electrically connected with the electrical connector, such that the LED light is lightened when the outer power supply is switched on;
wherein the U-type or H-type light tube is provided at two ends thereof with the LED light-emitting columns according to any one of claims 1-9 and their corresponding electrical leads, respectively.

24. The LED light having a U-type or H-type light tube according to claim 23, wherein at least one core column provided at the two ends of the U-type or H-type light tube is provided with an exhaust tube configured for evacuation and filled with a heat dissipation and protection gas.

25. The LED light having a U-type or H-type light tube according to any one of claims 23-24, wherein the LED driver is a constant current power supply configured to supply a constant-current driving voltage to the U-type or H-type light tube.

26. The LED light having a U-type or H-type light tube according to any one of claims 23-25, wherein a plurality of U-type light tubes are arranged on the same plane to form a LED plane light.
